Europäisches Patentamt

European Patent Office

Office européen des brevets

(11) Veröffentlichungsnummer: **0 262 470 B1**

(12) **EUROPÄISCHE PATENTSCHRIFT**

(45) Veröffentlichungstag der Patentschrift: **26.02.92**

(51) Int. Cl.⁵: **B29C 45/16**

(21) Anmeldenummer: **87113066.2**

(22) Anmeldetag: **08.09.87**

(54) **Spritzkopf zum Herstellen von Mehrschicht-Formkörpern aus thermoplastischem Kunststoffmaterial.**

(30) Priorität: **27.09.86 DE 3632928**

(43) Veröffentlichungstag der Anmeldung:
**06.04.88 Patentblatt 88/14**

(45) Bekanntmachung des Hinweises auf die
Patenterteilung:
**26.02.92 Patentblatt 92/09**

(84) Benannte Vertragsstaaten:
**AT BE CH DE ES FR GB IT LI LU NL SE**

(56) Entgegenhaltungen:
**DE-A- 2 247 995      DE-A- 2 259 818
DE-A- 2 445 112      DE-A- 3 247 000
DE-A- 3 305 931      FR-A- 2 217 147
FR-A- 2 243 807**

(73) Patentinhaber: **Battenfeld GmbH
Scherl 10
W-5882 Meinerzhagen(DE)**

(72) Erfinder: **Eckardt, Helmut Dipl.-Ing.
Goethestrasse 18
W-5882 Meinerzhagen(DE)**
Erfinder: **Ehritt, Jürgen
Auf der Platte 3
W-5912 Hilchenbach-Müsen(DE)**

(74) Vertreter: **Müller, Gerd et al
Patentanwälte HEMMERICH-
MÜLLER-GROSSE-POLLMEIER-MEY Hammerstrasse 2
W-5900 Siegen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Durch die nicht vorveröffentlichte EP 0 261 350-A2 (Art.54,3 EPÜ) gehört bereits ein Spritzkopf zum Herstellen von MehrschichtFormkörpern mit einem Kern aus z. B. geschäumtem thermoplastischen Kunststoffmaterial und einer Außenhaut aus bspw. ungeschäumten thermoplastischem Kunststoffmaterial zum Stand der Technik, der eine axial verschiebbare Schließnadel besitzt, die an ihrem freien Ende eine zentrale Düsenöffnung enhält, an die sich nach rückwärts ein Verbindungskanal anschließt, der eine radiale Umfangsöffnung hat. Diese radiale Umfangsöffnung des Verbindungskanals der Schließnadel steht mit der Umfangsöffnung einer der beiden im Gehäuse vorgehenen Zuführkanäle in Verbindung. Die Schließnadel ist nicht nur axial verschiebbar, sondern auch winkelverdrehbar im Gehäuse untergebracht, damit sich die Strömungsverbindung des Zuführkanals zum Verbindungskanal unterbrechen läßt.

Der Erfindung liegt die Aufgabe zugrunde, einen Spritzkopf zu schaffen, der mit relativ geringen baulichen Abmessungen verwirklich werden kann, dabei einfach aufgebaut ist, die Herstellung von Formkörpern aus drei verschiedenen Komponenten ermöglicht sowie auch die kostengünstige Herstellung großvolumiger und stabiler Mehrschicht-Formkörper mit geringem Konstruktionsgewicht gewährleistet.

Diese Aufgabe wird , durch einen Spritzkopf gelöst bei dem zum Herstellen von Mehrschicht-Formkörpern mit einem Kern aus z.B. geschäumten thermoplastischem Kunststoffmaterial und einer Außenhaut aus bspw. ungeschäumten thermoplastischem Kunststoffmaterial, einerseits durch einen im Gehäuse axial verschiebbar geführten, rohrförmigen Einsatz eine innere Düse für das eine Kunststoffmaterial gebildet ist, die wiederum eine ebenfalls axial verschiebbare Nadel als Schließvorrichtung enthält, und bei dem durch einen Ringraum zwischen dem rohrförmigen Einsatz und dem Gehäuse eine Ringdüse für das andere Kunststoffmaterial gebildet ist, zu der der axial verschiebbare, rohrförmige Einsatz die Schließvorrichtung bildet, wobei die Schließnadel an ihrem freien Ende einen Ansatz hat, der in der Schließstellung der inneren Düse zumindest bündig mit dem freien Ende des rohrförmigen Einsatzes abschließt, unddie Schließnadel an ihrem freien Ende eine zentrale Düsenöffnung enthält, an die sich nach rückwärts ein Verbindungskanal anschließt, der eine radiale Umfangsöffnung hat, wobei in der Wandung des rohrförmigen Einsatzes ebenfalls ein längs verlaufender Verbindungskanal ausgebildet ist, der am Innenumfang des rohrförmigen Einsatzes radial ausmündet und die radiale Umfangsöffnung des Verbindungskanals der Schließnadel mit der radialen Ausmündung des Verbindungskanals im rohrförmigen Einsatz mindestens in der der Schließstellung entsprechenden Axialstellung der Schließnadel durch Relativdrehung um die gemeinsame Längsachse wahlweise in und außer Strömungsverbindung stellbar ist.

Der besondere Vorteil dieser erfindungsgemäßen Ausbildung eines Spritzkopfes ist darin zu sehen, daß trotz einer Verarbeitungsmöglichkeit für drei Werkstoffkomponenten die Ausstattung des Spritzkopfes mit nur einer Ringdüse ermöglicht wird. Dieser kann daher mit geringen Querschnittsabmessungen und minimalem baulichen Aufwand erstellt werden.

Außerdem wird die Möglichkeit erreicht, die dritte Werkstoffkomponente während des Spritzvorgangs beliebig in das Formwerkzeug einzuführen. Sie kann also nicht nur für sich allein, sondern auch in beliebiger Reihenfolge nach jeder der beiden anderen Werkstoffkomponenten in das Formwerkzeug gebracht werden. Möglich ist sogar das gleichzeitige Einführen sämtlicher Werkstoffkomponenten in das Formwerkzeug.

Nach einem weiterbildenden Erfindungsmerkmal schlägt Anspruch 2 vor, daß die axiale Ausdehnung der radialen Umfangsöffnung des Verbindungskanals in der SChließnadel und/oder der radialen Ausmündung des Verbindungskanals im rohrförmigen Einsatz mindestens auf die wirksame Länge des Ansatzes am freien Ende der Schließnadel abgestimmt, vorzugsweise etwas größer als diese bemessen ist.

Nach Anspruch 3 können aber auch die radiale Umfangsöffnung des Verbindungskanals in der Schließnadel und/oder die radiale Ausmündung des Verbindungskanals im rohrförmigen Einsatz in verschiedenen axialen Ausdehnungsbereichen eine unterschiedliche periphere Ausdehnung aufweisen.

Durch diese Maßnahmen wird die Zuführung der dritten Werkstoffkomponente in das Formwerkzeug innerhalb weiter Grenzen variierbar.

Besonders bewährt sich ein erfindungsgemäßer Spritzkopf dann, wenn entsprechend der Lehre des Anspruchs 4 die Verbindungskanäle in der Schließnadel und dem rohrförmigen Einsatz einen Gaskanal bilden, in dem die radiale Umfangsöffnung und die radiale Ausmündung miteinander als Drehschieber-Absperrventil wirksam sind. Als Arbeitsgas kann dabei im einfachsten Falle Luft in das Formwerkzeug eingepreßt werden, wobei das zuvor in das Formwerkzeug eingebrachte Kunststoffmaterial unter Ausbildung von Hohlkammern gegen die Formwandungen des Formwerkzeuges gepreßt wird und dadurch relativ dünnwandige, aber trotzdem in hohem Maße formstabile Formkörper gebildet werden.

In baulicher Hinsicht ist es empfehlenswert, den Spritzkopf nach Anspruch 5 so auszugestalten, daß die Schließnadel sowohl axial verschiebbar als auch verdrehbar ist. Hingegen sollte nach Anspruch 6 der rohrförmige Einsatz ausschließlich axial verschiebbar vorgesehen werden.

Bewährt hat es sich ferner, wenn nach der Erfindung gemäß Anspruch 7 der Verdrehwinkel der Schließnadel begrenzt bzw. begrenzbar ist, wobei er nach Anspruch 8 bei unterschiedlichen Axialstellungen auch unterschiedlich begrenzt, zumindest aber begrenzbar sein kann.

Eine optimale Funktion des erfindungsgemäßen Spritzkopfes läßt sich nach Anspruch 9 dadurch erreichen, daß der Stellantrieb für den rohrförmigen Einsatz und die Stellantriebe für die Schließnadel durch die die verschiedenen Kunststoffmaterialien zuführenden - beiden - Spritzkolben oder dergleichen, z.B. wegabhängig, steuerbar sind.

In der Zeichnung ist der Gegenstand der Erfindung in Ausführungsbeispielen dargestellt. Es zeigen

Figur 1    im Längsschnitt einen Spritzkopf zum Herstellen von Mehrschicht-Formkörpern bei geschlossener Grundstellung sämtlicher Düsen,

Figur 2    eine der Fig. 1 entsprechende Darstellung des Spritzkopfes bei geöffneter Ringdüse,

Figur 3    den Spritzkopf bei geöffneter innerer Düse,

Figur 4    den Spritzkopf bei geöffneter Zentraldüse,

Figur 5    eine Ausgestaltung des Spritzkopfes, die das beliebige Öffnen und Schließen der Zentraldüse bei offener oder geschlossener Ringdüse und auch bei offener und geschlossener innerer Düse ermöglicht.

In der Zeichnung ist der Spritzkopf 1 einer Vorrichtung zur Herstellung von Kunststoff-Formkörperen dargestellt, welcher über sein Düsenmundstück 2 an die Angußbuchse 3 einer ansonsten nicht dargestellten Spritzform anlegbar ist.

Im Gehäuse 4 des Spritzkopfes 1 ist koaxial zum Düsenmundstück 2 ein Kanal 5 ausgebildet, in dem unter Bildung eines Ringspaltes 6 ein rohrförmiger Einsatz 7 begrenzt axial verschiebbar aufgenommen ist. Innerhalb des rohrförmigen Einsatzes 7, und zwar in enger Anpassung an dessen Innenumfang 8 ist wiederum eine Nadel 9a begrenzt axial verschiebbar geführt. Sowohl der rohrförmige Einsatz 7 als auch die Nadel 9 ist mit einem nach hinten durch den Spritzkopf 1 geführten (nicht gezeigten) Schaft versehen, an dem jeweils ein Verschiebeantrieb angreift, der bspw. durch Druckmittel, insbesondere hydraulisch, betätigt werden kann.

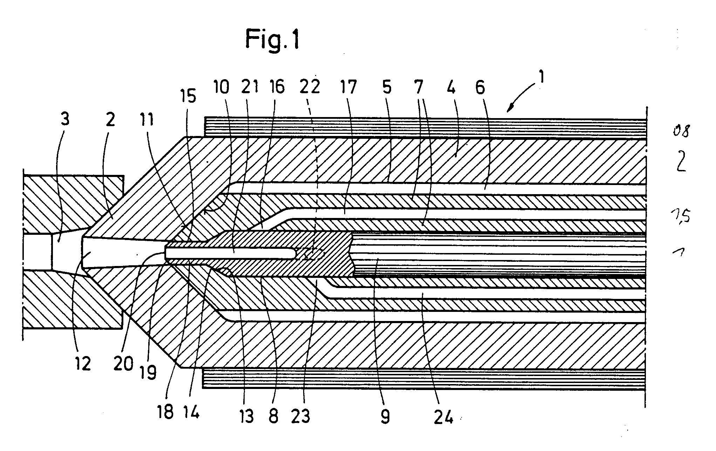

Das vordere Ende des rohrförmigen Einsatzes 7 ist mit einem Dichtkonus 10 versehen, der mit einem angepaßten Dichtkonus 11 im Düsenmundstück 2 in der vorgeschobenen Abdichtstellung (Fig. 1) des rohrförmigen Einsatzes 7 zusammenwirkt und dabei den Ringspalt 6 gegen die Austrittsöffnung 12 des Düsenmundstücks 2 absperrt.

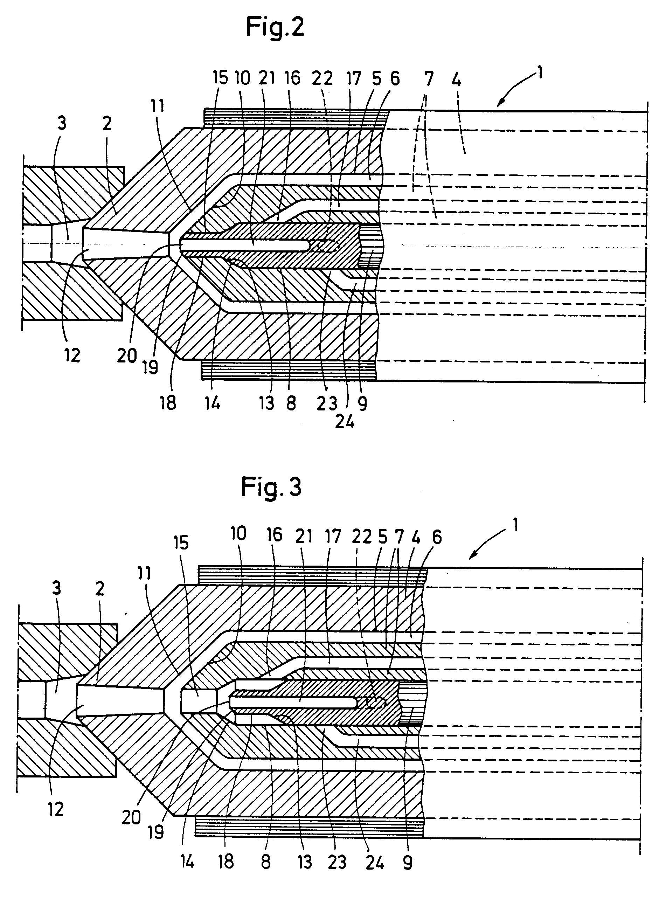

Durch axiales Zurückfahren des rohrförmigen Einsatzes 7 mittels seines Verschiebeantriebs wird der Dichtkonus 10 vom Dichtkonus 11 abgehoben und damit der Ringspalt 6 mit der Austrittsöffnung 12 in Verbindung gebracht (Fig. 2), so daß das in diesem befindliche, thermoplastische Kunststoffmaterial in die Spritzform gelangen kann.

Auch die Nadel 9 ist mit einem Dichtkonus 13 versehen, welcher in der vorgeschobenen Stellung der Nadel 9 an einem entsprechenden Dichtkonus 14 im rohrförmigen Einsatz 7 anliegt, wodurch dessen Innenumfang 8 durch die zentrale Durchtrittsöffnung 15 abgesperrt wird.

Nahe dem Dichtkonus 14 liegt am Innenumfang 8 des rohrförmigen Einsatzes 7 die Mündung 16 eines Zuführkanals 17 für ein zweites, thermoplastisches Kunststoffmaterial, wie das deutlich den Fig. 1 bis 5 entnommen werden kann. Der Zuführkanal 17 verläuft dabei in Längsrichtung durch die Wand des rohrförmigen Einsatzes 7 und steht an seinem hinteren Ende mit einer Spritzeinheit für das betreffende thermoplastische Kunststoffmaterial in Verbindung. Eine entsprechende Spritzeinheit für thermoplastisches Kunststoffmaterial ist natürlich auch an den Ringspalt 6 zwischen dem Gehäuse 4 und dem rohrförmigen Einsatz 7 angeschlossen.

Ein wichtiges Ausbildungsmerkmal besteht noch darin, daß die Nadel 9 an ihrem freien Ende einen im Durchmesser verringerten Ansatz 18 aufweist, der in vorgeschobener Lage der Nadel 9 in die Durchtrittsöffnung 15 des rohrförmigen Einsatzes 7 hineinragt und diesen auf seiner ganzen Länge ausfüllt.

Besonders zweckmäßig ist es sogar, wenn in der vorgschobenen Stellung der Nadel 9 der Ansatz 18 mit seinem vorderen Ende geringfügig aus der Durchtrittsöffnung 15 vorsteht und dort mit einer Anfasung versehen ist, die sich als Verlängerung an den Dichtkonus 10 des rohrförmigen Einsatzes 7 anschließt und dabei um ein geringes Maß in die Austrittsöffnung 12 des Düsenmundstücks 2 vorspringt.

Die Nadel 9 weist im freien Ende ihres Ansatzes 18 eine zentrale Düsenöffnung 20 auf, an die sich nach rückwärts ein Verbindungskanal 21 anschließt, der wiederum eine radiale Umfangsöffnung 22 hat.

Der radialen Umfangsöffnung 22 des Verbindungskanals 21 ist am Innenumfang 8 des rohrförmigen Einsatzes 7 die radiale Mündung 23 eines längs verlaufenden Verbindungskanals 24 vorgesehen, welcher sich - ebenso wie der Zuführkanal 17 -in der Wand des rohrförmigen Einsatzes 7 befindet, und zwar vorzugsweise in einem dem Zuführkanal 17 diametral gegenüberliegenden Querschnittsbereich. Die radiale Mündung 23 des Verbindungskanals 24 hat dabei einen größeren Abstand vom Dichtkonus 14 als die radiale Mündung 16 des Zuführkanals 17.

An dieser Stelle sei erwähnt, daß die Nadel 9 innerhalb des rohrförmigen Einsatzes 7 nicht nur axial verschiebbar geführt, sondern vielmehr auch noch zumindest begrenzt winkelverdrehbar hierin gelagert ist und zu diesem Zweck mit einem (nicht gezeigten) Drehantrieb gekuppelt ist, der bspw. durch Druckmittel, insbesondere hydraulisch, betätigt werden kann. Auf diese Art und Weise ist es möglich, die radiale Umfangsöffnung 22 des Verbindungskanals 21 der Nadel 9 wahlweise mit der Mündung 23 des Verbindungskanals 24 im rohrförmigen Einsatz 7 in und außer Strömungsverbindung zu bringen.

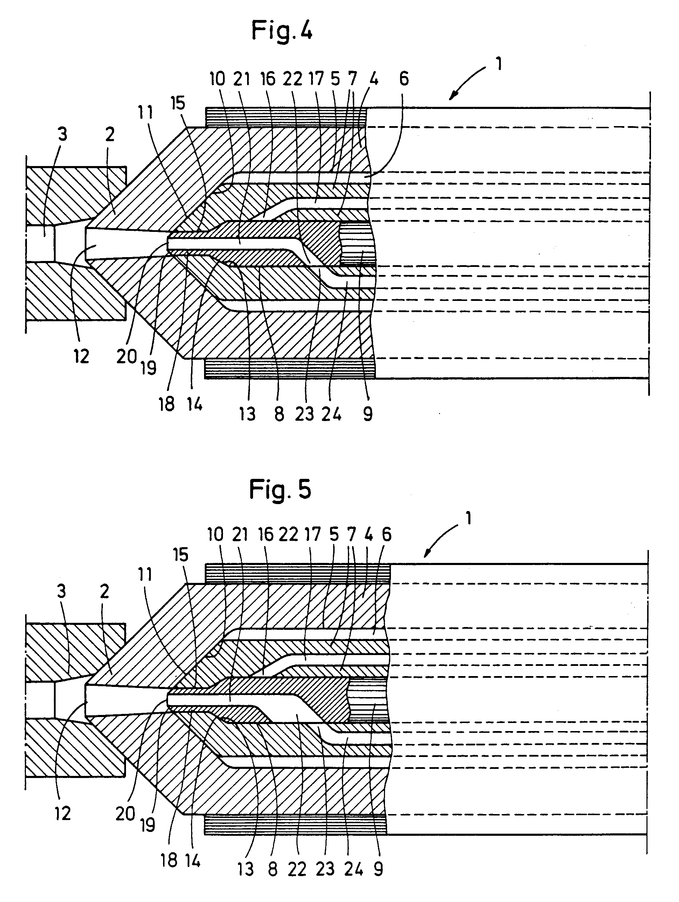

Während beim Ausführungsbeispiel des Spritzkopfes 1 nach den Fig. 1 bis 4 sowohl die radial Umfangsöffnung 22 des Verbindungskanals 21 als auch die Mündung 23 des Verbindungskanals 24 eine Ausgestaltung haben, welche die Herstellung einer Strömungsverbindung nur in der vollständig vorgeschobenen Axialstellung der Nadel 9 ermöglicht, ist in Fig. 5 eine Ausgestaltung der radialen Umfangsöffnung 22 zu sehen, die die Herstellung einer solcher Strömungsverbindung in jeder möglichen Axialstellung der Nadel 9 relativ zum rohrförmigen Einsatz 7 zuläßt.

Durch den Verbindungskanal 24 im rohrförmigen Einsatz 7 und im Verbindungskanal 21 in der Nadel 9 kann der zentralen Düsenöffnung 20 des Spritzkopfes 1 thermoplastisches Kunststoffmaterial zugeführt werden, sobald die radiale Umfangsöffnung 22 des Verbindungskanals 21 mit der Mündung 23 des Verbindungskanals 24 in Deckungslage gebracht wird. In diesem Falle ist dann der Verbindungskanal 24 an eine Spritzeinheit für das betreffende thermoplastische Kunststoffmaterial angeschlossen.

Vorzugsweise dient jedoch die zentrale Düsenöffnung 20 dem Zweck, die Zuführung eines Gases, bspw. von Stickstoff oder Luft unter relativ hohem Druck in die Spritzform zu ermöglichen, nachdem zuvor in diese zunächst Kunststoffmaterial aus dem Ringspalt 6 und dann Kunststoffmaterial aus dem rohrförmigen Einsatz 7 eingepreßt worden ist, wie das die Fig. 2 und 3 andeutungsweise erkennen lassen.

Das gemäß Fig. 2 aus dem Ringspalt 6 durch die zwischen dem Dichtungskonus 10 und dem Dichtungskonus 11 gebildete Ringdüse über die Austrittsöffnung 12 des Düsenmundstücks 2 in die Spritzform eingebrachte, thermoplastische Kunststoffmaterial kann hier ein treibmittelfreier Kunststoff zur Bildung einer kompakten Außenhaut für die Kunststoff-Formkörper sein, während das aus dem rohrförmigen Einsatz 7 durch die Durchtrittsöffnung 15 und die Austrittsöffnung 12 in die Spritzform gelangende thermoplastische Kunststoffmaterial vorzugsweise ein treibmittelhaltiger Kunststoff ist, der einen porigen Kern im Kunststoff-Formkörper ausbilden kann.

Die jeweilige Axialstellung des rohrförmigen Einsatzes 7 im Gehäuse 4 des Spritzkopfes, wie auch die jeweilige Axialstellung und die jeweilige Drehstellung der Nadel 9 innerhalb des rohrförmigen Einsatzes 7 kann durch entsprechende Steuerung der zugeordneten Verschiebe- bzw. Drehantriebe den jeweiligen Bedürfnissen entsprechend bewirkt werden, wobei sich die Steuersignale von den dem Spritzkopf 1 zugeordneten Spritzeinheiten oder dergleichen ableiten lassen.

Während bei der Bauart eines Spritzkopfes nach den Fig. 1 bis 4 die zentrale Düsenöffnung 20 in der Nadel 9 eine Medienzufuhr in das Spritzwerkzeug nur zuläßt, wenn zugleich die vom rohrförmigen Einsatz 7 umschlossene, innere Düse 13, 14, 15 zuvor in Schließlage gebracht worden ist (Fig. 4), zeigt Fig. 5 eine andere Ausbildungsvariante. Hierbei hat bspw. die radiale Umfangsöffnung 22 des Verbindungskanals 21 in der Nadel 9 eine solche axiale Ausdehnung, daß sie sowohl in der Schließlage der inneren Düse 13, 14 15 als auch in deren Öffnungslage mit der radialen Mündung des Verbindungskanals 24 im rohrförmigen Einsatz 7 in und außer Strömungsverbindung gebracht werden kann. Hierzu ist lediglich die entsprechende Winkeldrehung der Nadel 9 relativ zum rohrförmigen Einsatz 7 nötig.

Selbstverständlich wäre die gleiche Wirkung auch erzielbar, wenn die axiale Ausdehnung der radialen MÜndung 23 des Verbindungskanals 24 entsprechend verlängert würde oder aber sowohl die radiale Umfangsöffnung 22 als auch die Mündung 23 eine entsprechend abgestimmte, axial verlängerte Ausdehnung erhalten.

Die vorstehend beschriebenen und in der Zeichnung dargestellten Spritzköpfe 1 werden für die Herstellung von Kunststoff-Formkörpern nach dem Mehrkomponenten-Spritzgießverfahren eingesetzt. Sie bieten dabei die Möglichkeit, mit geringen baulichen Abmessungen und minimalem baulichen Aufwand gezielte Produkteigenschaften zu erhalten, indem unteschiedliche Kunststoffmaterialien für die Bildung von Haut- und Kernbereichen eingesetzt werden können. So lassen sich bspw. die Kernzonen aus einem verstärkten Kunststoffmaterial und die Haut- bzw. Randzonen aus einem unverstärkten Kunststoffmaterial herstellen. Hieraus ergeben sich einerseits eine gute Oberflächenqualität mit hoher Schlagfähigkeit durch die unverstärkten Kunststoffmaterialien sowie eine große Steifigkeit durch die verstärkten Kunststoffmaterialien.

Ebenso lassen sich aber auch Formteile mit einer weichen Außenhaut und einem harten Kern herstellen.

Insbesondere bei der Herstellung dickwandiger Formteile spielt die Dichte derselben eine große Rolle. Diese kann unter Benutzung der vorstehend beschriebenen Spritzköpfe 1 einerseits dadurch reduziert werden, daß die zur Bildung des Kerns benutzten Kunststoffmaterialien einen entsprechend hohen Treibmittelzusatz erhalten. Eine noch größere Dichtereduzierung läßt sich jedoch dadurch erreichen, daß durch die zentrale Düsenöffnung relativ große Gas- oder Luftmengen in die Spritzform eingepreßt werden können, nachdem zuvor in diese die Kunststoffmaterialien eingebracht worden sind. Gas oder Luft führen dann nämlich zur Ausbildung relativ großer Hohlräume innerhalb der Kunststoff-Formteile.

Mit Hilfe des durch die zentrale Düsenöffnung 20 in die Spritzform eingeführten dritten Mediums, welches nicht nur Gas oder Luft, sondern - wie bereits erwähnt - auch ein thermoplastisches Kunststoffmaterial sein kann, läßt sich der sogenannte Nachdruck auf den in der Spritzform gebildeten Kunststoff-Formkörper ausüben und dadurch das vollständige und sichere Ausformen dieser Kunststoff-Formkörper gewährleisten.

Eine mögliche Arbeitsweise mit einem Spritzkopf 1 der vorstehend erläuterten und in der Zeichnung dargestellten Bauart ist folgende:
Einspritzen der ersten Komponente des thermoplastischen Kunststoffmaterials aus dem Ringspalt 6 durch die geöffnete Ringdüse 10, 11 (Fig. 2) in vorgegebener Menge;
Öffnen der inneren Düse 13, 14, 15 durch Axialverschiebung der Nadel 9 in Abhängigkeit von einer vorgegebenen Betriebsstellung der Spritzeinheit für die erste Komponente des thermoplastischen Kunststoffmaterials;
weg- und/oder zeitabhängiges Schließen der Ringdüse 10, 11 für die erste Komponente des thermoplastischen Kunststoffmaterials;
abhängig von der Betriebsstellung der Spritzeinheit für die zweite Komponente des thermoplastischen Kunststoffmaterials dreht die Nadel 9 in Öffnungs- bzw. Durchlaßstellung für die zentrale Düsenöffnung 20 und gibt dadurch den Zustrom der dritten Medienkomponente (Gas oder Luft bzw. thermoplastischer Kunststoff) frei;
weg- oder zeitabhängig, bspw. von der Spritzeinheit für die zweite Komponente des thermoplastischen Kunststoffs, wird die Nadel 9 in ihre Schließstellung geschoben;
der Nachdruck auf den Formkörper in der Spritzform wird über die dritte, durch die zentrale Düsenöffnung 20 zugeführte Medienkomponente auf dem Formkörper in der Spritzform hervorgebracht.

Die Steuerung des Spritzkopfes 1 kann aber auch -entsprechend den gewünschten, unterschiedlichen Zielsetzungen - auf andere Art und Weise erfolgen.

Abschließend sei noch darauf hingewiesen, daß das Schließen der zentralen Düsenöffnung 20 ohne Axialverschiebung der Nadel 9 erfolgen kann, so daß hierdurch keine nachteilige Materialverdrängung in die Spritzform hinein hervorgerufen wird.

## Patentansprüche

1. Spritzkopf (1) zum Herstellen von Mehrschicht-Formkörpern mit einem Kern aus z.B. geschäumten thermoplastischem Kunststoffmaterial und einer Außenhaut aus bspw. ungeschäumtem thermoplastischem Kunststoffmaterial, bei dem einerseits durch einen im Gehäuse(4) axial verschiebbar geführten, rohrförmigen Einsatz (7) eine innere Düse (13, 14, 15) für das eine Kunststoffmaterial gebildet ist, die wiederum eine ebenfalls axial verschiebbare Nadel (8) als Schließvorrichtung enthält, und bei dem durch einen Ringraum (6) zwischen dem rohrförmigen Einsatz (7) und dem Gehäuse (4) eine Ringdüse für das andere Kunststoffmaterial gebildet ist, zu der der axial verschiebbare, rohrförmige Einsatz (7) die Schließvorrichtung bildet, wobei die Schließnadel(9) an ihrem freien Ende (19) einen Ansatz (18) hat, der in der Schließstellung der inneren Düse zumindest bündig mit dem freien Ende des rohrförmigen Einsatzes (7) abschließt, und
die Schließnadel (9) an ihrem freien Ende (18, 19) eine zentrale Düsenöffnung (20) enthält, an die sich nach rückwärts ein Verbindungskanal (21) anschließt, der eine radiale Umfangsöffnung (22) hat,
wobei in der Wandung des rohrförmigen Einsatzes (7) ebenfalls ein längs verlaufender Verbindungskanal (24) ausgebildet ist, der am Innenumfang (8) des rohrförmigen Einsatzes (7) radial ausmündet (23),
und die radiale Umfangsöffnung (22) des Verbindungskanals (21) der Schließnadel (9) mit der radialen Ausmündung (23) des Verbindungskanals (24) im rohrförmigen Einsatz (7) mindestens in der der Schließstellung entsprechenden Axialstellung der Schließnadel (9) durch Relativdrehung um die gemeinsame Längsachse wahlweise in und außer Strömungsverbindung stellbar ist.

2. Spritzkopf nach Anspruch 1,
**dadurch gekennzeichnet,**
daß die axiale Ausdehnung der radialen Umfangsöffnung (22) des Verbindungskanals (21) in der Schließnadel (9) und/oder der radialen Ausmündung (23) des Verbindungskanals (24) im rohrförmigen Einsatz (7) mindestens auf die wirksame Länge des Ansatzes (18) am freien Ende (18, 19) der Schließnadel (9) abgestimmt, vorzugsweise etwas größer als diese bemessen ist.

**3.** Spritzkopf nach einem der Ansprüche 1 und 2, **dadurch gekennzeichnet,**
daß die radiale Umfangsöffnung (22) des Verbindungskanals (21) in der Schließnadel (9) und/oder die radiale Ausmündung (23) des Verbindungskanals (24) im rohrförmigen Einsatz (7) in verschiedenen axialen Ausdehnungsbereichen eine unterschiedliche periphere Ausdehnung aufweisen.

**4.** Spritzkopf nach einem der Ansprüche 1 bis 3, **dadurch gekennzeichnet,**
daß die Verbindungskanäle (21 und 24) in der Schließnadel (9) und im rohrförmigen Einsatz (7) einen Gaskanal bilden, in dem die radiale Umfangsöffnung (22) und die radiale Ausmündung (23) miteinander als Drehschieber-Absperrventil wirksam sind.

**5.** Spritzkopf nach einem der Ansprüche 1 bis 4, **dadurch gekennzeichnet,**
daß die Schließnadel (9) sowohl axial verschiebbar als auch verdrehbar ist.

**6.** Spritzkopf nach einem der Ansprüche 1 bis 5, **dadurch gekennzeichnet,**
daß der rohrförmige Einsatz (7) ausschließlich axial verschiebbar ist.

**7.** Spritzkopf nach einem der Ansprüche 1 bis 6, **dadurch gekennzeichnet,**
daß der Verdrehwinkel der Schließnadel (9) begrenzt bzw. begrenzbar ist.

**8.** Spritzkopf nach einem der Ansprüche 1 bis 7, **dadurch gekennzeichnet,**
daß der Verdrehwinkel der Schließnadel (9) bei unterschiedlichen Axialstellungen unterschiedlich begrenzt bzw. begrenzbar ist.

**9.** Spritzkopf nach einem der Ansprüche 1 bis 8, **dadurch gekennzeichnet,**
daß der Stellantrieb für den rohrförmigen Einsatz (7) und die Stellantriebe für die Schließnadel (9) durch die die verschiedenen Kunststoffmaterialien zuführenden Spritzeinheiten oder dergleichen steuerbar sind.

**Claims**

**1.** Injection head (1) for the production of multilayer foam bodies with a core of, for example, foamed thermoplastic synthetic material and an outer skin of, for example, unfoamed thermoplastic synthetic material, in which on the one hand an inner nozzle (13, 14, 15) for the one synthetic material is formed by a tubular insert (7), which is guided to be axially displaceable in the housing (4) and which moreover contains a likewise axially displaceable needle (8) as closure device, and in which an annular nozzle for the other synthetic material is formed by an annular space (6) between the tubular insert (7) and the housing (4), for which other material the axially displaceable tubular insert (7) forms the closure device, wherein the closure needle (9) has at its free end (19) a projection (18) which in the closure setting closes the inner nozzle at least flush with the free end of the tubular insert (7), and the closure needle (9) at its free end (18, 19) contains a central nozzle opening (20) to which a connecting channel (21) adjoins rearwardly, which has a radial circumferential opening (22), wherein constructed in the wall of the tubular insert (7) is likewise a longitudinally extending connecting channel (24) which radially opens (23) at the inner circumference (8) of the tubular insert (7), and the radial circumferential opening (22) of the connecting channel (21) of the closure needle (9) is selectably settable into and out of flow connection with the radial port (23) of the connecting channel (24) in the tubular insert (7) at least in the axial setting of the closure needle (9) corresponding to the closure setting by relative rotation about the common longitudinal axis.

**2.** Injection head according to claim 1, characterised thereby that the axial extent of the radial circumferential opening (22) of the connecting channel (21) in the closure needle (9) and/or the radial port (23) of the connecting channel (24) in the tubular insert (7) at least coincides with the effective length of the projection (18) at the free end (18, 19) of the closure needle (9), preferably is dimensioned somewhat greater than this.

**3.** Injection head according to one of the claims 1 and 2, characterised thereby that the radial circumferential opening (22) of the connecting channel (21) in the closure needle (9) and/or the radial port (23) of the connecting channel (24) in the tubular insert (7) have a different peripheral extent in different axial regions of extent.

4.  Injection head according to one of claims 1 to 3, characterised thereby that the connecting channels (21 and 24) in the closure needle (9) and in the tubular insert (7) form a gas channel, in which the radial circumferential opening (22) and the radial port (23) cooperate with one another as rotary slide blocking valve.

5.  Injection head according to one of claims 1 to 4, characterised thereby that the closure needle (9) is axially displaceable as well as also rotatable.

6.  Injection head according to one of claims 1 to 5, characterised thereby that the tubular insert (7) is exclusively axially displaceable.

7.  Injection head according to one of claims 1 to 6, characterised thereby that the rotary angle of the closure needle (9) is restricted or restrictable.

8.  Injection head according to one of claims 1 to 7, characterised thereby that the rotary angle of the closure needle (9) is restricted or restrictable in the case of different axial settings.

9.  Injection head according to one of claims 1 to 8, characterised thereby that the setting drive for the tubular insert (7) and the setting drive for the closure needle (9) are controllable by the injection units or the like feeding the different synthetic materials.

**Revendications**

1.  Tête d'injection (1) pour la fabrication de corps moulés à plusieurs couches comportant un noyau par exemple en matière synthétique thermoplastique moussée et une enveloppe externe par exemple en une matière synthétique thermoplastique non moussée, tête d'injection dans laquelle d'une part, un éjecteur interne (13,14,15) est constitué par un élément tubulaire inséré, axialement déplaçable dans le carter (4), destiné à l'une des matières synthétiques et muni d'une aiguille (8) également axialement déplaçable servant d'organe d'obturation, et dans laquelle un espace annulaire (6) compris entre l'élément tubulaire inséré (7) et le carter (4) constitue un éjecteur annulaire destiné à l'autre matière synthétique, pour lequel l'élément inséré tubulaire axialement déplacable (7) constitue l'organe d'obturation, l'aiguille d'obturation (9) comportant à son extrémité libre (19) un prolongement (18) qui, en position d'obturation de l'éjecteur interne s'étend au moins jusqu'à fleur avec l'extrémité libre de l'élément inséré tubulaire (7), et l'aiguille d'obturation (9) comportant à son extrémité libre (18,19) une ouverture d'éjection centrale (20) à laquelle est raccordé par l'arrière un canal de liaison (21) qui présente une ouverture radiale (22), un canal de liaison longitudinal (24) étant pratiqué dans la paroi de l'élément tubulaire inséré (7) et débouchant radialement (23) sur la périphérie (8) de l'élément tubulaire inséré (7), et l'ouverture radiale (22) du canal de liaison (21) de l'aiguille d'obturation (9) étant réglable par rotation relative autour de l'axe longitudinal commun en position d'obturation ou en position de passage avec l'embouchure radiale (23) du canal de liaison (24) pratiqué dans l'élément tubulaire inséré (7), au moins dans la position axiale de l'aiguille d'obturation (9) correspondant à la position d'obturation.

2.  Tête d'injection selon la revendication 1 caractérisée en ce que la dimension axiale de l'ouverture radiale (22) du canal de liaison (21) pratiqué dans l'aiguille d'obturation (9) et/ou de l'embouchure radiale (23) du canal de liaison (24) pratiqué dans l'élément tubulaire inséré (7) correspond au moins à la longueur efficace du prolongement (18) à l'extrémité libre (18,19) de l'aiguille d'obturation (9), et est, de préférence, légèrement supérieure à celle-ci.

3.  Tête d'injection selon l'une des revendications 1 ou 2 caractérisée en ce que l'ouverture radiale (22) du canal de liaison (21) pratiqué dans l'aiguille d'obturation (9) et/ou l'embouchure radiale (23) du canal de liaison (24) pratiqué dans l'élément tubulaire inséré (7) présente, dans des zones axiales différentes, des dimensions périphériques différentes.

4.  Tête d'injection selon l'une des revendications 1 à 3 caractérisée en ce que les canaux de liaison (21 et 24) pratiqués dans l'aiguille d'obturation (9) et dans l'élément tubulaire inséré (7) forment un canal de passage de gaz dans lequel l'ouverture radiale (22) et l'embouchure radiale (23) agissent ensemble comme vanne papillon d'obturation.

5.  Tête d'injection selon l'une des revendications 1 à 4 caractérisée en ce que l'aiguille d'obturation (9) est déplaçable axialement et pivotable autour de l'axe.

6.  Tête d'injection selon l'une des revendications 1 à 5 caractérisée en ce que l'élément tubulaire inséré (7) n'est que déplaçable axialement.

7. Tête d'injection selon l'une des revendications 1 à 6 caractérisée en ce que l'angle de rotation de l'aiguille d'obturation (9) est limité ou limitable.

8. Tête d'injection selon l'une des revendications 1 à 7 caractérisée en ce que l'angle de rotation de l'aiguille d'obturation (9) est différemment limité ou limitable pour des positions axiales différentes.

9. Tête d'injection selon l'une des revendications 1 à 8 caractérisée en ce que l'organe de positionnement de l'élément tubulaire inséré (7) et les organes de positionnement de l'aiguille d'obturation (9) sont commandables par les unités d'injection ou analogue qui délivrent les diverses matières synthétiques.

# Fig.1

**Fig.2**

**Fig. 3**

## Fig. 4

## Fig. 5